# EUROPEAN PATENT APPLICATION

(11) **EP 3 373 634 A1**
(43) Date of publication of application: **12.09.2018**
(21) Application number: 16861960.9
(22) Date of filing: 24.10.2016
(51) Int. Cl.: H04W 24/08, G01S 11/06, H04M 3/42, H04W 16/18, H04W 84/12

(54) **RADIO WAVE STATE DETECTION SYSTEM AND RADIO WAVE STATE DETECTION METHOD**

(30) Priority: 06.11.2015 JP 2015218728; 23.03.2016 JP 2016057808
(71) Applicant: Recruit Holdings Co., Ltd., Tokyo 104-0061 (JP)
(72) Inventor: OKUBO, Kazunori, Tokyo 100-6640 (JP); MAEZAWA, Ryuichiro, Tokyo 100-6640 (JP); ARAKAWA, Hironori, Tokyo 100-6640 (JP)
(74) Representative: EIP
(86) International application number: PCT/JP2016/081475
(87) International publication number: WO 2017/077897

(57) **Abstract**

Conditions of radio waves emitted from Wifi equipment are detected with high accuracy. A Wifi radio wave detection terminal 100 detects a probe request including radio wave intensity of a mobile terminal 10 having a Wifi function and transmits a detection result to a management apparatus 200. The probe request includes information indicating the radio wave intensity of the mobile terminal 10. The management apparatus 200 registers the received detection result in a probe information database 202 in association with the mobile terminal 10. Then, when the information processing apparatus 300 receives a request for acquiring radio wave intensity information from the mobile terminal 10, the information processing apparatus 300 acquires radio wave intensity information indicating radio wave intensity of the terminal from the probe information database 202 and transmits the radio wave intensity information to the mobile terminal 10 as a reply.

## Description

### Cross-Reference to Related Application

The present application is based on Japanese Patent Application No. 2015-218728 filed on November 6, 2015, and Japanese Patent Application No. 2016-057808 filed on March 23, 2016, the content of which is herein incorporated.

### Technical Field

The present invention relates to a technology for grasping radio wave conditions in a predetermined area.

### Background Art

In accordance with spread of Wifi (Wireless Fidelity) equipment, study for measuring flow of people who drop into a shop or a cafe by utilizing radio waves emitted from Wifi equipment and development of a technology for performing position estimation are underway (see the following Patent Literature 1).

### Citation List

### Patent Literature

Patent Literature 1: Japanese Patent Laid-Open No. 2012-145586

### Summary of Invention

However, because a range of radio waves emitted from the Wifi equipment is wide, actually, even in the case where it is desired to estimate the number of customers who are in a shop (customers), problems are pointed out that passersby who pass near the shop are counted as the customers, and further that, because there are a lot of walls, goods, or the like, in rooms, which reflect radio waves and there are locations where radio waves do not reach, an estimation error in measurement of flow of people, or the like, is large.

The present disclosure has been made in view of the above-described circumstances, and an object of the present disclosure is to provide a technology which is capable of improving estimation accuracy of flow of people, or the like, by detecting conditions of radio waves emitted from Wifi equipment with high accuracy.

A radio wave condition detection system according to one aspect according to the present disclosure is a system for detecting radio wave conditions, and includes first receiving unit for receiving a probe request from a mobile terminal, probe information generating unit for generating probe information including radio wave intensity information indicating radio wave intensity and identification information of the mobile terminal on the basis of the received probe request, storage unit for storing the probe information of the mobile terminal, second receiving unit for receiving a request for acquiring radio wave intensity from the mobile terminal along with the identification information of the mobile terminal, generating unit for generating the radio wave intensity information of the mobile terminal by searching the storage means using the received identification information of the mobile terminal as a retrieval key, and replying unit for transmitting the generated radio wave intensity information to the mobile terminal as a reply.

Here, in the above-described configuration, the storage means may store the probe information of the mobile terminal of at least a certain period, and the generating means may generate the radio wave intensity information of the mobile terminal on the basis of the probe information of the mobile terminal of the certain period by searching the storage means.

### Advantageous Effects of Invention

According to the above-described configuration, it is possible to improve estimation accuracy of flow of people, or the like, by detecting conditions of radio waves emitted from Wifi equipment with high accuracy.

### Brief Description of Drawings

[Figure 1] Figure 1 is a diagram illustrating a schematic configuration of a radio wave condition detection system according to a first embodiment.
[Figure 2] Figure 2 is a block diagram illustrating a functional configuration of a Wifi radio wave detection terminal.
[Figure 3] Figure 3 is a diagram illustrating an example of content of probe information.
[Figure 4] Figure 4 is a block diagram illustrating a configuration of a management server.
[Figure 5] Figure 5 is a block diagram illustrating a configuration of an information processing apparatus.
[Figure 6] Figure 6 is a flowchart illustrating operation procedure of the Wifi radio wave detection terminal.
[Figure 7] Figure 7 is a flowchart illustrating operation procedure of the management server.
[Figure 8] Figure 8 is a flowchart illustrating operation procedure of the information processing apparatus.
[Figure 9] Figure 9 is a diagram illustrating an example of display of radio wave intensity information.
[Figure 10] Figure 10 is a diagram illustrating a schematic configuration of a radio wave condition detection system according to a second embodiment.
[Figure 11] Figure 11 is a block diagram illustrating a functional configuration of the Wifi radio wave detection terminal.
[Figure 12] Figure 12 is a diagram illustrating an example of content of the probe information.
[Figure 13] Figure 13 is a block diagram illustrating a configuration of the management server.
[Figure 14] Figure 14 is a sequence diagram illustrating operation for specifying the Wifi radio wave detection terminal.
[Figure 15] Figure 15 is a sequence diagram illustrating operation for confirming radio wave intensity.

### Description of Embodiments

### A. First embodiment

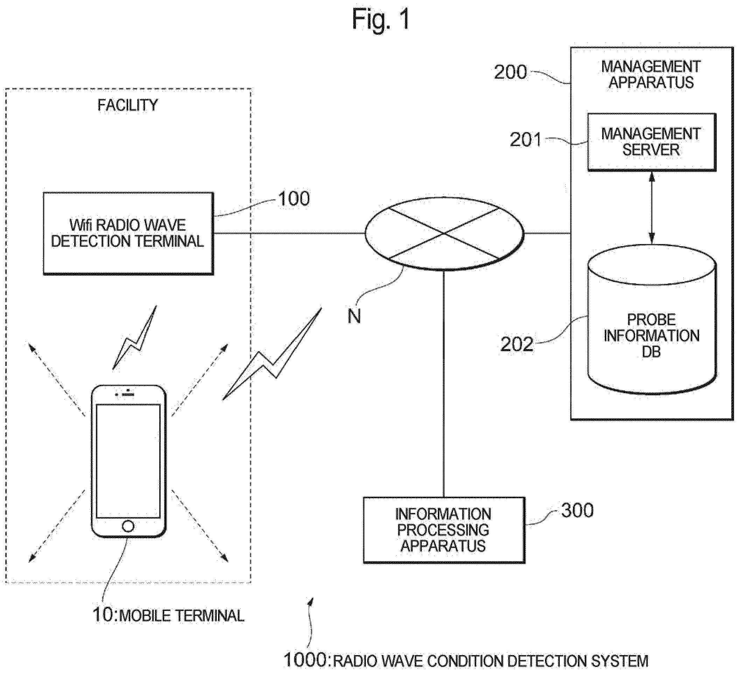

Figure 1 is a diagram illustrating a schematic configuration of a radio wave condition detection system 1000 according to a first embodiment. As illustrated in Figure 1, the radio wave condition detection system 1000 includes a mobile terminal 10 having a Wifi function, a Wifi radio wave detection terminal 100 provided in association with a facility such as a restaurant and a bar, a management apparatus 200 provided at a location different from a location of the Wifi radio wave detection terminal 100, and an information processing apparatus 300 which transmits as a reply information indicating radio wave intensity (radio wave intensity information) of the mobile terminal 10, detected by the Wifi radio wave detection terminal 100 in response to a request from the mobile terminal 10. The Wifi radio wave detection terminal 100, the management apparatus 200 and the information processing apparatus 300 can perform communication with each other via a communication network N. Note that, while a case is assumed in Figure 1 for convenience of explanation where there is one Wifi radio wave detection terminal 100 in a facility, there may be a plurality of Wifi radio wave detection terminals 100 in the facility (see a second embodiment). Further, while a restaurant or a bar is illustrated as an example of the facility, the present invention can be applied to any facility indoors or not such as, for example, a complex amusement system, a shopping mall, a shop in a department store, a hospital, an arena and a park.

In the radio wave condition detection system of the present embodiment, the Wifi radio wave detection terminal 100 detects a probe request including radio wave intensity of the mobile terminal 10 having a Wifi function and transmits the detection result to the management apparatus 200. The probe request includes information indicating radio wave intensity of the mobile terminal 10. The management apparatus 200 registers the received detection result in a probe information database 202 in association with the mobile terminal 10. Then, when the information processing apparatus 300 receives a request for acquiring information indicating radio wave intensity (radio wave intensity information) of the mobile terminal 10 from the mobile terminal 10, the information processing apparatus 300 acquires radio wave intensity information indicating radio wave intensity of the terminal by searching the probe information database 202 and transmits the radio wave intensity information to the mobile terminal 10 as a reply. By this means, an investigator (such as, for example, an owner of the facility) who investigates Wifi radio wave conditions within the facility using the mobile terminal 10 can quickly grasp a degree of radio wave intensity obtained at each location in the facility, so that it is possible to perform estimation with high accuracy, for example, estimate that the mobile terminal is located inside the shop in the case where the radio wave intensity is equal to or higher than X1 dB, and estimate that the mobile terminal is located outside the shop in the case where the radio wave intensity is equal to or lower than X1 dB.

The Wifi radio wave detection terminal 100 is provided at a facility such as, for example, the above-described restaurant, and detects radio wave intensity of the mobile terminal 10 located near the facility. The Wifi radio wave detection terminal 100 is configured with, for example, a small PC (Personal Computer), a Wifi module, a power source, an external storage apparatus (an SD card or a USB memory), or the like.

The management apparatus 200, which is an apparatus which manages probe information (which will be described in detail later) including the radio wave intensity information of the mobile terminal 10, detected at the Wifi radio wave detection terminal 100, includes a management server 201 and a probe information database (DB) 202. The management apparatus 200 is configured with, for example, a computer with high arithmetic processing capacity, and is configured by a predetermined program for server being executed at the computer.

The communication network N includes a communication network which enables the mobile terminal 10, the Wifi radio wave detection terminal 100, the management apparatus 200 and the information processing apparatus 300 to perform information communication with each other. The communication network N may be any of, for example, the Internet, a LAN, a lease line, a telephone line, an intranet, a mobile communication network, Bluetooth, Wifi, other communication lines, combination thereof, or the like, and may be either a wired network or a wireless network.

The information processing apparatus 300 can receive various kinds of information and display content of the various kinds of information and can transmit information input by the user using an operating unit to the outside. As such an information processing apparatus, for example, a typical personal computer, a mobile terminal such as a smartphone and a tablet type computer, or the like, can be used. Here, as an example, it is assumed that the information processing apparatus 300 is a smartphone in which predetermined application software (so-called app) is installed. The information processing apparatus 300 is used for acquiring radio wave intensity information indicating radio wave intensity of the mobile terminal 10 which is a request source by searching the probe information database 202 in response to a request for acquiring the radio wave intensity from the mobile terminal 10 and transmitting the radio wave intensity information to the mobile terminal 10 as a reply.

The mobile terminal 10, which is, for example, possessed by an investigator who investigates Wifi radio wave conditions within the facility, has a Wifi function for performing radio communication via an access point (which is not illustrated), or the like. In the present embodiment, while a smartphone is assumed as the mobile terminal 10, the present invention can be applied to any terminal having a Wifi function, such as a mobile phone, a PHS, a personal computer (PC), a notebook PC, a personal digital assistance (PDA) and a video game console. Note that, while, in the present embodiment, for convenience of explanation, a case is assumed where the investigator possesses the mobile terminal 10, it is not intended that the present invention is limited to this, and the present invention can be applied to a mobile terminal 10 of any user (that is, a user who is not relevant to the facility, or the like) who can utilize the present system.

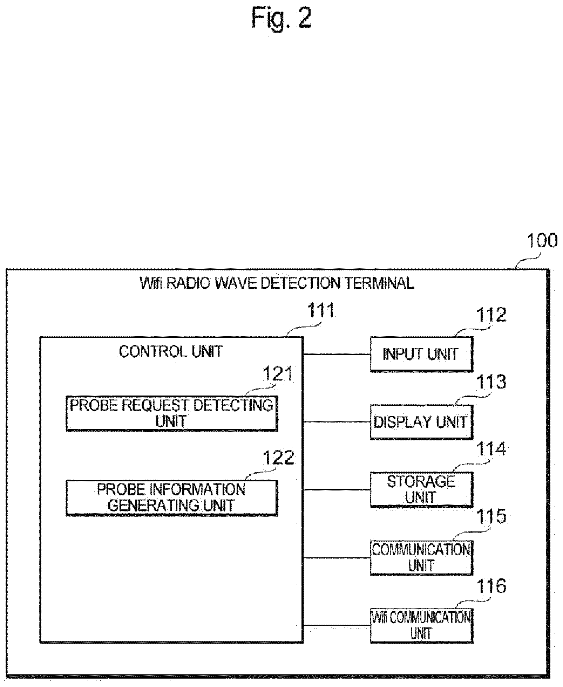

Figure 2 is a block diagram illustrating a functional configuration of the Wifi radio wave detection terminal 100. As illustrated, the Wifi radio wave detection terminal 100 includes a control unit 111, an input unit 112, a display unit 113, a storage unit 114, a communication unit 115 and a Wifi communication unit 116.

The control unit 111, which is, for example, configured by a predetermined operation program being executed at a computer system including a CPU, a ROM, a RAM, or the like, includes a probe request detecting unit 121 and a probe information generating unit 122 as functional blocks.

The input unit 112, which is, for example, input means such as a keyboard connected to the control unit 111, is used for inputting various kinds of information. The display unit 113, which is, for example, display means such as a liquid crystal display panel connected to the control unit 111, displays various kinds of images. The storage unit 114, which is storage means such as a hard disk apparatus connected to the control unit 111, stores operation programs to be executed at the control unit 111 and various kinds of data.

The communication unit 115 is connected to the control unit 111 and performs processing relating to information communication with the management apparatus 200. The Wifi communication unit (first receiving means) 116 performs processing relating to information communication with the mobile terminal 10.

The probe request detecting unit 121 detects a probe request which is regularly broadcasted (simultaneously transmitted) by each mobile terminal 10 to look for an access point. The probe request is received via the Wifi communication unit 116.

The probe information generating unit (probe information generating means) 122 generates probe information including terminal address information, or the like, which is information for specifying the mobile terminal 10 for which the probe request is detected. The generated probe information is transmitted to the management apparatus 200 via the communication unit 115.

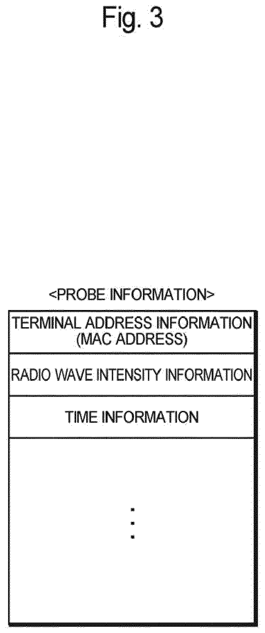

Figure 3 is a diagram illustrating an example of content of the probe information. As illustrated in Figure 3, the probe information includes "terminal address information (MAC address)" which is information for identifying the mobile terminal 10 detected by the Wifi radio wave detection terminal 100, "radio wave intensity information" which is information indicating intensity of a radio wave emitted from the mobile terminal 10, "time information" which is information indicating time at which the probe request from the mobile terminal 10 is detected, or the like.

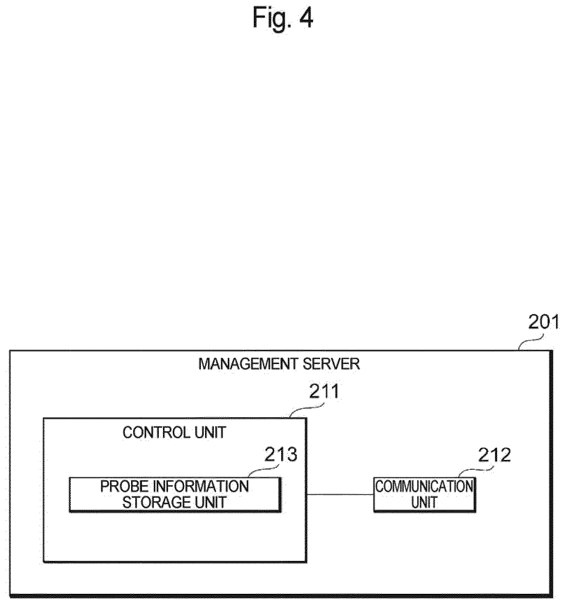

Figure 4 is a block diagram illustrating a configuration of a management server 201 which constitutes the management apparatus 200. The management server 201, which manages the probe information transmitted from the Wifi radio wave detection terminal 100, includes a control unit 211, a communication unit 212, an input unit and a display unit which are not illustrated, or the like.

The control unit 211, which is, for example, configured by a predetermined operation program being executed at a computer system including a CPU, a ROM, a RAM, or the like, includes a probe information storage unit 213 as a functional block. The communication unit 212 is connected to the control unit 211 and performs processing relating to information communication with the Wifi radio wave detection terminal 100.

The probe information storage unit (storage means) 213 performs processing of storing the probe information which is transmitted from the Wifi radio wave detection terminal 100 and which is received via the communication unit 212 in the probe information DB (storage means) 202 (see Figure 1).

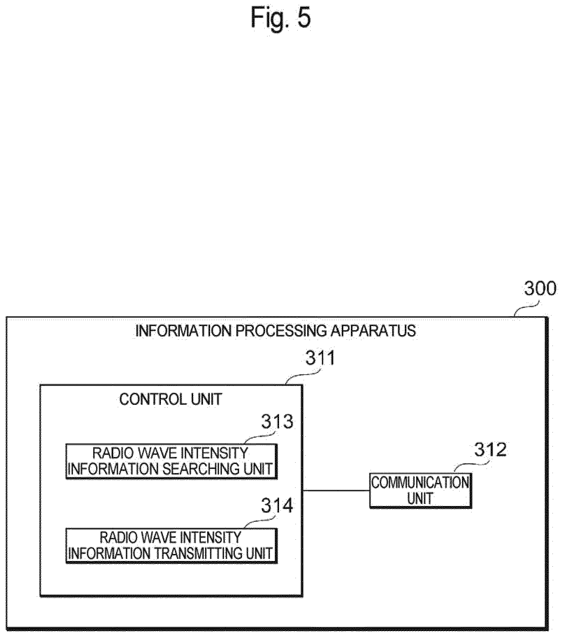

Figure 5 is a block diagram illustrating a configuration of the information processing apparatus 300. The information processing apparatus 300, which searches the probe information DB 202 (see Figure 1) in response to a request from the mobile terminal 10, acquires radio wave intensity information of the mobile terminal 10 and transmits the radio wave intensity information to the mobile terminal 10 as a reply, includes a control unit 311, a communication unit 312, an input unit and a display unit which are not illustrated, or the like.

The control unit 311, which is, for example, configured by a predetermined operation program being executed at a computer system including a CPU, a ROM, a RAM, or the like, includes a radio wave intensity information searching unit 313 and a radio wave intensity information transmitting unit 314 as functional blocks. The communication unit (second receiving means) 312 is connected to the control unit 311 and performs processing relating to information communication with the information processing apparatus 300.

The radio wave intensity information searching unit (generating means) 313 searches the probe information DB 202 in response to a request for acquiring the radio wave intensity information of the mobile terminal 10 from the mobile terminal 10. Here, the request for acquiring the radio wave intensity information includes terminal address information of the mobile terminal 10. The radio wave intensity information searching unit 313 specifies probe information (see Figure 3) registered in association with the terminal address information of the mobile terminal 10 by searching the probe information DB 202 using the terminal address information of the mobile terminal 10 as a retrieval key and acquires the radio wave intensity information from the probe information.

The radio wave intensity information transmitting unit (replying means) 314 transmits the radio wave intensity information acquired by the radio wave intensity information searching unit 313 to the mobile terminal 10 as a reply using the terminal address information, or the like, of the mobile terminal 10.

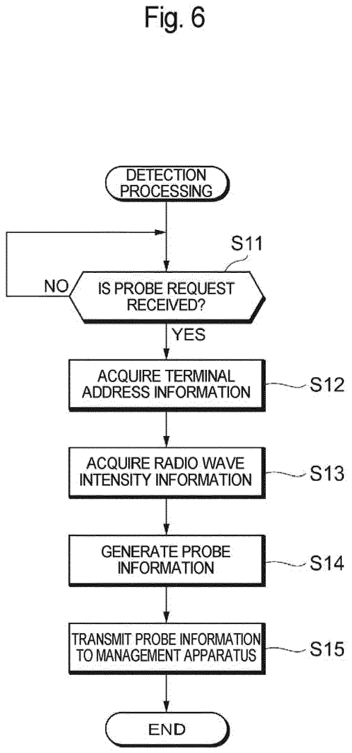

Figure 6 is a flowchart illustrating operation procedure of the Wifi radio wave detection terminal 100. The probe request detecting unit 121 of the Wifi radio wave detection terminal 100 determines whether or not a probe request from the mobile terminal 10 located in the neighborhood is received by the Wifi communication unit 116 (step S11). The processing in step S11 is repeated while a probe request is not received (step S11; No). Note that, it is assumed that the mobile terminal 10 regularly broadcasts a probe request to look for an access point to which the mobile terminal 10 can be connected.

If a probe request is received (step S11; Yes), the probe request detecting unit 121 acquires the terminal address information included in the probe request (step S12) and acquires the radio wave intensity information indicating intensity of the radio wave emitted from the mobile terminal 10 which transmits the probe request from the Wifi communication unit 116 (step S13).

The probe information generating unit 122 then generates probe information including "terminal address information" of the mobile terminal 10 for which the probe request is detected, "radio wave intensity information", and "time information" indicating time at which the probe request from the mobile terminal 10 is detected (step S14). The probe information is transmitted to the management apparatus 200 via the communication unit 115 (step S15).

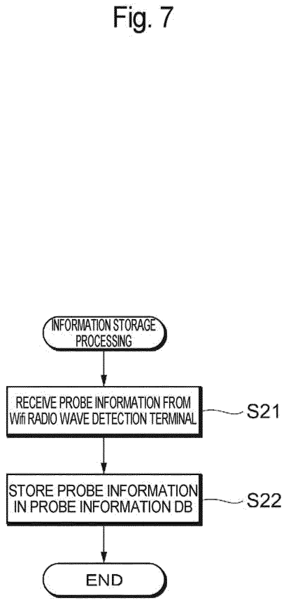

Figure 7 is a flowchart illustrating operation procedure of the management server 201. The probe information storage unit 213 of the management server 201 receives the probe information transmitted from the Wifi radio wave detection terminal 100 via the communication unit 212 (step S21).

The probe information storage unit 213 then stores the received probe information in the probe information DB 202 (step S22). The probe information is stored in the probe information DB 202, for example, in chronological order.

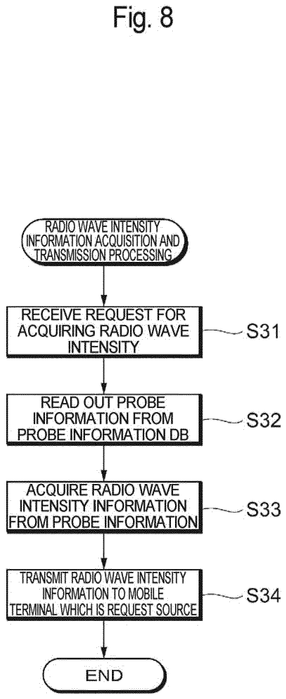

Figure 8 is a flowchart illustrating operation procedure when the information processing apparatus 300 acquires and transmits the radio wave intensity information in response to the request from the mobile terminal 10. An investigator who investigates Wifi radio wave conditions within the facility requests for acquiring radio wave intensity information of the mobile terminal 10 by operating the mobile terminal 10 as appropriate. If the mobile terminal 10 detects such operation, the mobile terminal 10 activates predetermined software, or the like, which is installed, and issues a request for acquiring the radio wave intensity information, to which a terminal address of the mobile terminal 10 is added. The request for acquiring radio wave intensity information is issued at predetermined time intervals (for example, at intervals of a few seconds) while circumstances that the investigator confirms radio wave intensity while moving, or the like, are taken into account.

When the radio wave intensity information searching unit 313 of the information processing apparatus 300 receives the request for acquiring radio wave intensity information from the mobile terminal 10 via the communication unit 312 (step S31), the radio wave intensity information searching unit 313 reads out probe information stored within a certain period from the probe information DB (step S32). The certain period described here can be, for example, the latest T seconds when the request for acquiring radio wave intensity information is received. Further, for example, the investigator may designate an arbitrary period using the information processing apparatus 300 and set the designated period as the certain period.

Note that a period while each probe information is stored may be judged on the basis of time information included in each probe information, or may be judged on the basis of time information which is added when the probe information storage unit 213 stores each probe information in the probe information DB 202.

The radio wave intensity information searching unit 313 then acquires (generates) radio wave intensity information from the read probe information (step S33). At this time, in the case where there are a plurality of pieces of radio wave intensity information, the radio wave intensity information searching unit 313, for example, obtains an average value of the radio wave intensity and sets the average value as the radio wave intensity information. Of course, in the case where there is one piece of read probe information, radio wave intensity information included in the probe information may be utilized as is.

The radio wave intensity information transmitting unit 314 adds the terminal address information of the mobile terminal 10 to the radio wave intensity information acquired by the radio wave intensity information searching unit 313 and transmits the radio wave intensity information to the mobile terminal 10 (step S34). Note that, because the terminal address information of the mobile terminal 10 is included in each probe information acquired by the radio wave intensity information searching unit 313, it is only necessary to utilize these terminal address information.

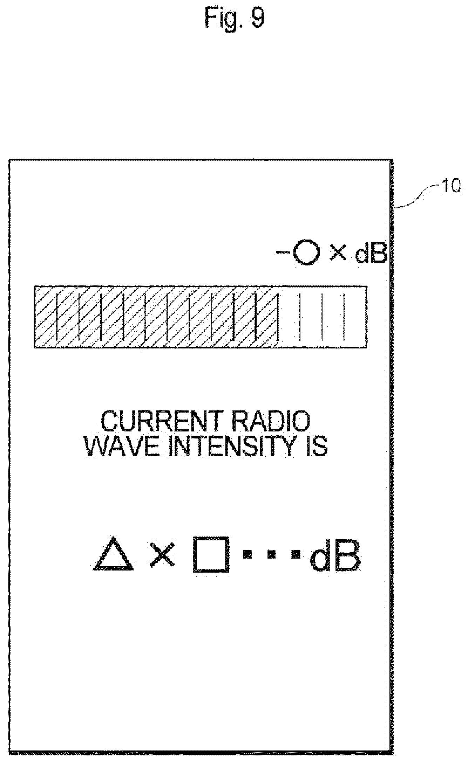

In this manner, the radio wave intensity information transmitted from the information processing apparatus 300 is transmitted to the mobile terminal 10 via the communication network N. When the mobile terminal 10 receives the radio wave intensity information from the information processing apparatus 300, the mobile terminal 10 informs the investigator of Wifi radio wave conditions within the facility, for example, by displaying a screen as illustrated in Figure 9 at a display unit.

As described above, according to the present embodiment, it is possible to detect Wifi radio wave conditions near the facility in real time with high accuracy using the mobile terminal 10 having a Wifi function. By the Wifi radio wave conditions within the facility being grasped in advance, it is possible to judge whether a user who carries the mobile terminal 10 is located inside the facility or outside the facility on the basis of radio wave intensity of the mobile terminal 10 with higher accuracy than with related art. For example, it is possible to make a judgement with high accuracy such that, as a result of investigation of the Wifi radio wave conditions, in the case where radio wave intensity of the mobile terminal 10 detected by the Wifi radio wave detection terminal 100 is equal to or higher than E1, it is highly likely that the user who carries the mobile terminal 10 is located inside the facility, while, in the case where the radio wave intensity is lower than E1, it is highly likely that the user is located outside the facility.

Further, it is also possible to optimize a location where the Wifi radio wave detection terminal 100 is provided on the basis of a measurement result of the radio wave intensity. As described above, while it is predicted that radio waves may be blocked by a number of walls and goods, and there are a lot of locations where radio waves do not reach (so-called dead spots) depending on facilities, it is possible to optimize a location where the Wifi radio wave detection terminal 100 is provided by utilizing the measurement result of the radio wave intensity.

Note that, the present invention is not limited to the above-described embodiment, and can be implemented in other various forms within a scope not deviating from the gist of the present invention. Therefore, the above-described embodiment is merely an example in all aspects, and should not be interpreted in a limited way. For example, there can be an embodiment described below.

### B. Second embodiment

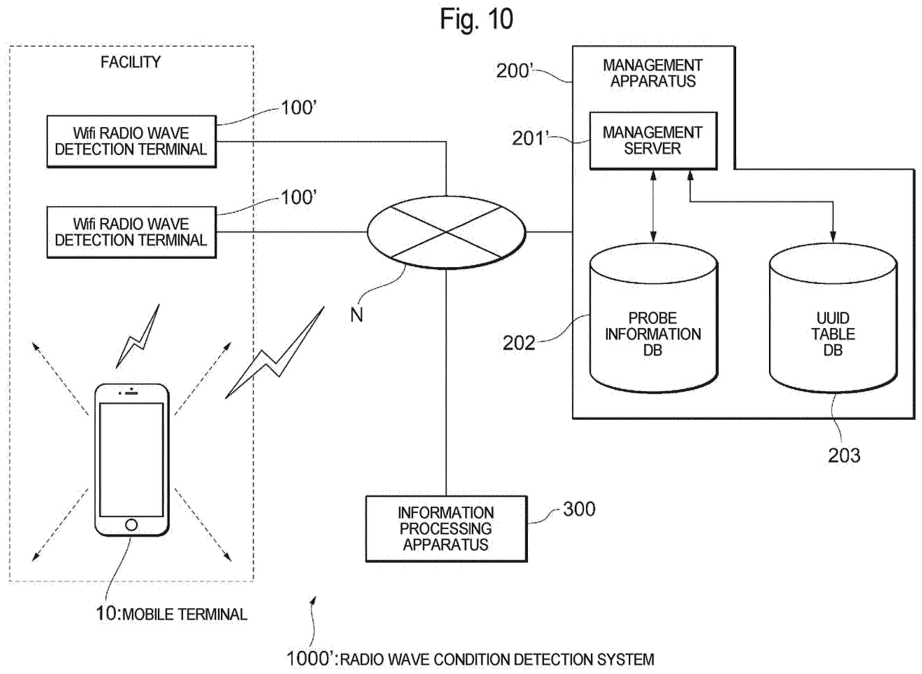

Figure 10 is a diagram illustrating a schematic configuration of a radio wave condition detection system 1000' according to a second embodiment. The radio wave condition detection system 1000', which is a system assuming that a plurality of Wifi radio wave detection terminals 100' are provided within a facility, can discern a Wifi radio wave detection terminal 100' which detects the radio wave intensity. Here, because the radio wave condition detection system 1000' illustrated in Figure 10 is similar to the radio wave condition detection system 1000 illustrated in Figure 1 except that a UUID table database (DB) 203 is provided at the management apparatus 200, the same reference signs will be assigned to corresponding components, and detailed description will be omitted.

In the UUID table DB 203, a first UUID and a second UUID are registered in association with each other to identify the Wifi radio wave detection terminal 100'. The first UUID is identification information of the Wifi radio wave detection terminal 100', which is embedded in a QR code attached on a back face, or the like, of the Wifi radio wave detection terminal 100'.

Meanwhile, the second UUID is identification information of the Wifi radio wave detection terminal 100', which is issued and stored by the Wifi radio wave detection terminal 100' upon initial activation (upon initial power-on) of the Wifi radio wave detection terminal 100'.

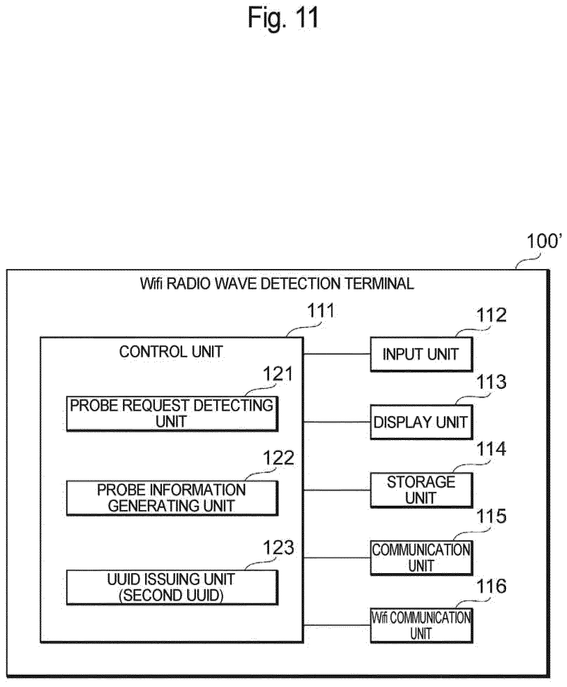

Figure 11 to Figure 13 are respectively diagrams illustrating configurations of the Wifi radio wave detection terminal 100', probe information and a management server 201' according to the modified example, and correspond to Figure 2 to Figure 4. Therefore, the same reference signs are assigned to the corresponding portions, and detailed description will be omitted.

The Wifi radio wave detection terminal 100' illustrated in Figure 11 includes a UUID issuing unit 123. The UUID issuing unit 123 issues and stores the second UUID for identifying the Wifi detection terminal 100' upon initial activation (that is, upon initial power-on after manufacturing and shipment, or the like). The second UUID of the Wifi radio wave detection terminal 100' issued at the UUID issuing unit 123 is transmitted to the management apparatus 200'.

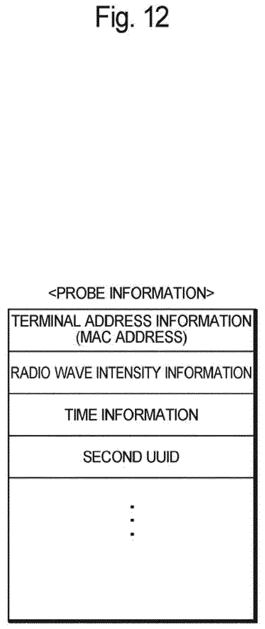

The probe information illustrated in Figure 12 includes the second UUID for identifying the Wifi radio wave detection terminal 100' in addition to terminal address information (MAC address) for identifying the mobile terminal 10, radio wave intensity information and time information. The second UUID is acquired from the UUID issuing unit 123 when the probe information generating unit 122 generates probe information.

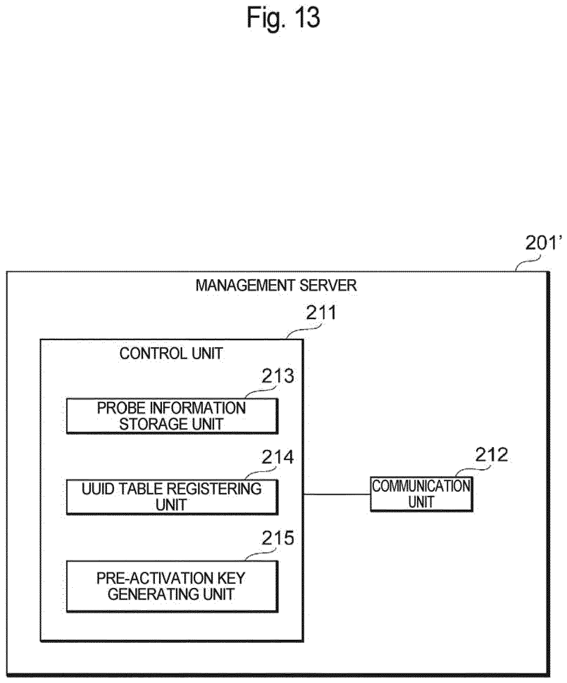

The management server 201' illustrated in Figure 13 includes a UUID table registering unit 214 and a pre-activation key generating unit 215. The UUID table registering unit 214 registers the second UUID transmitted from the Wifi radio wave detection terminal 100' and the first UUID which is transmitted from the mobile terminal 10 and embedded in a QR code of the Wifi radio wave detection terminal 100' in a UUID table database (DB) 203 in association with each other. Meanwhile, the pre-activation key generating unit 215 generates a pre-activation key (such as, for example, five-letter alphanumeric characters) to be transmitted to the Wifi detection terminal 100' from the management server 201'.

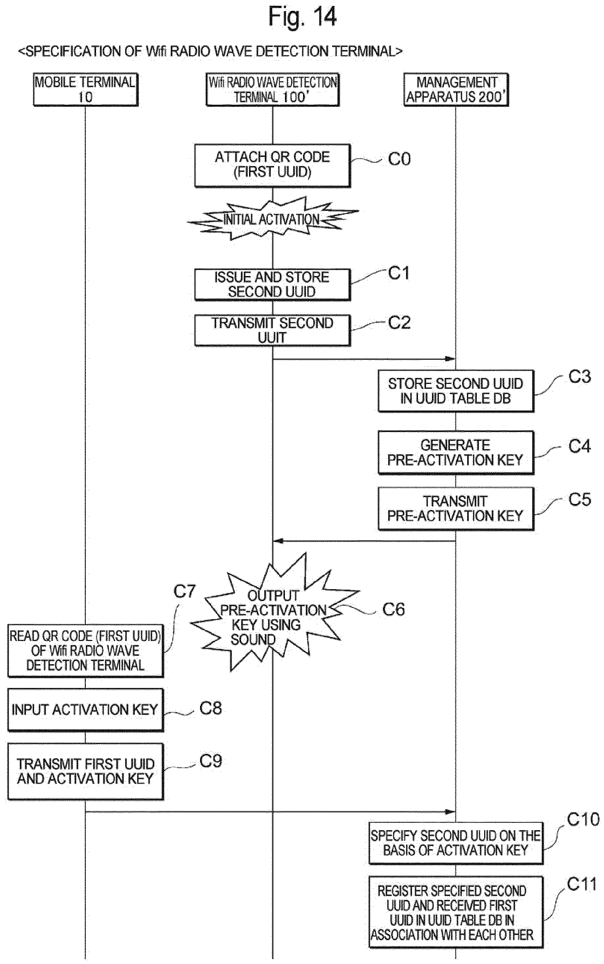

Figure 14 is a sequence diagram for specifying the Wifi radio wave detection terminal 100' according to the second embodiment. Note that, it is assumed that a QR code in which the first UUID is embedded is attached to the Wifi radio wave detection terminal 100' (C0).

For example, if the investigator powers on the Wifi radio wave detection terminal 100' for the first time upon initial activation, the control unit 111 of the Wifi radio wave detection terminal 100 issues a second UUID for identifying the Wifi radio wave detection terminal 100' and stores the second UUID in the storage unit 114 (C1). The issued second UUID is transmitted to the management apparatus 200' from the Wifi radio wave detection terminal 100' via the communication network N (C2). When the management apparatus 200' receives the second UUID from the Wifi radio wave detection terminal 100' and stores the second UUID in the UUID table DB 203 (C3), the management apparatus 200' generates a pre-activation key (for example, five-letter alphanumeric characters) (C4) and transmits the pre-activation key to the Wifi radio wave detection terminal 100' (C5). When the Wifi radio wave detection terminal 100' receives the pre-activation key, the Wifi radio wave detection terminal 100' outputs the pre-activation key using sound by utilizing a built-in speaker, or the like (C6). The investigator connects earphones to a port for earphones provided at the input unit 112 of the Wifi radio wave detection terminal 100' and confirms content of the pre-activation key of, for example, five-letter alphanumeric characters. Note that it is also possible to light a predetermined lamp (cause a predetermined lamp to blink), or the like, of the Wifi radio wave detection terminal 100' when the pre-activation key is received so as to allow the investigator to easily grasp at which timing the Wifi radio wave detection terminal 100' receives the pre-activation key.

The investigator then activates a dedicated application installed at the mobile terminal 10 and reads the QR code attached to the Wifi radio wave detection terminal 100' (C7). Further, the investigator inputs the pre-activation key acquired through the earphones by operating the mobile terminal 10 (C8). The QR code read by the mobile terminal 10 and the pre-activation key input to the mobile terminal 10 are transmitted to the management apparatus 200' (C9). The management apparatus 200' specifies the second UUID by referring to the UUID table DB 203 on the basis of the received pre-activation key (C10). When the management apparatus 200' specifies the second UUID, the management apparatus 200' registers the received first UUID in the UUID table DB 203 in association with the specified second UUID (C11) and finishes the processing.

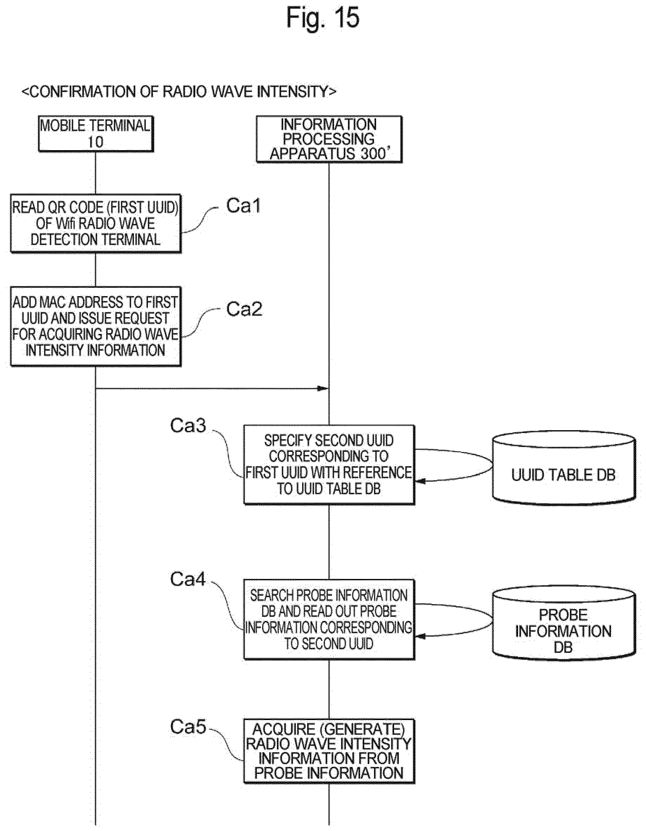

Figure 15 is a sequence diagram for confirming the radio wave intensity according to the second embodiment. The investigator first activates the dedicated application installed at the mobile terminal 10 and reads the QR code attached to the Wifi radio wave detection terminal 100' (Ca1), and, then, issues a request for acquiring radio wave intensity information, to which a terminal address (MAC address) of the mobile terminal 10 is added, to the information processing apparatus 300 (Ca2). Note that the request for acquiring radio wave intensity information is issued at predetermined time intervals (for example, at intervals of a few seconds) while circumstances that the investigator confirms radio wave intensity while moving, or the like, are taken into account.

When the radio wave intensity information searching unit 313 of the information processing apparatus 300 receives the request for acquiring radio wave intensity information including the read QR code (that is, the first UUID) and the MAC address of the mobile terminal 10, the radio wave intensity information searching unit 313 specifies a second UUID corresponding to the first UUID with reference to the UUID table DB 203 of the management apparatus 2000 (Ca3). The radio wave intensity information searching unit 313 then searches the probe information DB 202 and reads out probe information corresponding to the second UUID stored within a certain period from the probe information DB 202 (Ca4). The certain period described here can be, for example, the latest T seconds when the request for acquiring radio wave intensity information is received. Further, for example, the investigator may designate an arbitrary period using the information processing apparatus 300 and set the designated period as the certain period.

The radio wave intensity information searching unit 313 then acquires (generates) radio wave intensity information from the read probe information (Ca5). At this time, in the case where there are a plurality of pieces of radio wave intensity information, the radio wave intensity information searching unit 313, for example, obtains an average value of the radio wave intensity and sets the average value as the radio wave intensity information. Note that, because the subsequent operation is similar to that in the present embodiment, description will be omitted.

As described above, according to the present embodiment, even in the case where there are a plurality of Wifi radio wave detection terminals 100' within a facility, or the like, because it is possible to detect reception intensity of the mobile terminal 10 for each of the Wifi radio wave detection terminals 100', it is possible to detect Wifi radio wave conditions near the facility with higher accuracy.

### C. Other

While, in each embodiment described above, the management apparatus 200 and the information processing apparatus 300 are separately configured, the both apparatuses may be integrally configured. Of course, a configuration of part of one apparatus (for example, the management apparatus 200) may be mounted on the other apparatus (for example, the information processing apparatus 300). A configuration to be employed may be set and changed as appropriate while operation, or the like, of the present system is taken into account. Further, a program for realizing each embodiment described above may be stored in a recording medium. It is possible to install the above-described program in a computer for managing a waiting list of reservations for the facility by using the recording medium. Here, the recording medium in which the above-described program is stored may be a non-transitory recording medium. While the non-transitory recording medium is not particularly limited, for example, the non-transitory recording medium may be a recording medium such as a CD-ROM.

Further, while, in each embodiment, Wifi is illustrated as one type of standards of radio communication, it is not intended that the present invention is limited to this, and the present invention can be applied to equipment, or the like, to which other communication standards are applied. Still further, the present invention can be applied to equipment, or the like, which utilizes infrared light, or the like, other than a radio wave.

### Reference Signs List

10: mobile terminal
100: Wifi radio wave detection terminal
111: control unit
112: input unit
113: display unit
114: storage unit
115: communication unit
116: Wifi communication unit
121: probe request detecting unit
122: probe information generating unit
123: UUID issuing unit
200, 200': management apparatus
201, 201': management server
202: probe information database
211: control unit
212: communication unit
213: probe information storage unit
214: UUID table registering unit
215: pre-activation key generating unit
300: information processing apparatus
311: control unit
312: communication unit
313: radio wave intensity information searching unit
1000, 1000': radio wave condition detection system

## Claims

1. A radio wave condition detection system for detecting radio wave conditions, comprising:
first receiving unit for receiving a probe request from a mobile terminal;
probe information generating unit for generating probe information including radio wave intensity information indicating radio wave intensity and identification information of the mobile terminal on a basis of the received probe request;
storage unit for storing the probe information of the mobile terminal;
second receiving unit for receiving a request for acquiring radio wave intensity from the mobile terminal along with the identification information of the mobile terminal;
generating unit for generating the radio wave intensity information of the mobile terminal by searching the storage means using the received identification information of the mobile terminal as a retrieval key; and
replying unit for transmitting the generated radio wave intensity information to the mobile terminal as a reply.

2. The radio wave condition detection system according to claim 1,
wherein the storage means stores the probe information of the mobile terminal of at least a certain period, and
the generating means generates the radio wave intensity information of the mobile terminal on a basis of the probe information of the mobile terminal of the certain period by searching the storage means.

3. A radio wave condition detection system for detecting radio wave conditions, including a radio wave detection terminal, a management apparatus and an information processing apparatus,
the radio wave detection terminal comprising:
first receiving unit for receiving a probe request from a mobile terminal;
probe information generating unit for generating probe information including radio wave intensity information indicating radio wave intensity and identification information of the mobile terminal on a basis of the received probe request; and
transmitting unit for transmitting the generated probe information to the management apparatus,
the management apparatus comprising:
storage unit for storing the probe information of the mobile terminal transmitted from the radio wave detection terminal, and
the information processing apparatus comprising:
second receiving unit for receiving a request for acquiring radio wave intensity from the mobile terminal along with the identification information of the mobile terminal;
generating unit for generating the radio wave intensity information of the mobile terminal by searching the storage means using the received identification information of the mobile terminal as a retrieval key; and
replying unit for transmitting the generated radio wave intensity information to the mobile terminal as a reply.

4. A radio wave condition detection method for detecting radio wave conditions, comprising:
a first receiving step of receiving a probe request from a mobile terminal;
a probe information generating step of generating probe information including radio wave intensity information indicating radio wave intensity and identification information of the mobile terminal on a basis of the received probe request;
a storage step of storing the probe information of the mobile terminal in storage means;
a second receiving step of receiving a request for acquiring radio wave intensity from the mobile terminal along with the identification information of the mobile terminal;
a generating step of generating the radio wave intensity information of the mobile terminal by searching the storage means using the received identification information of the mobile terminal as a retrieval key; and
a replying step of transmitting the generated radio wave intensity information to the mobile terminal as a reply.

5. A radio wave condition detection system for detecting radio wave conditions, including a plurality of radio wave detection terminals, a management apparatus and an information processing apparatus,
the management apparatus comprising:
a database in which first identification information set in advance for each of the detection terminals and second identification information set by each of the detection terminals are stored in association with each other; and
storage unit for storing probe information generated by each of the detection terminals,
each of the detection terminals comprising:
first receiving unit for receiving a probe request from a mobile terminal;
probe information generating unit for generating the probe information including radio wave intensity information and identification information of the mobile terminal on a basis of the received probe request; and
setting unit for issuing and setting the second identification information for identifying the detection terminal, and
the information processing apparatus comprising:
second receiving unit for receiving a request for acquiring radio wave intensity along with the identification information of the mobile terminal and the first identification information of the detection terminal acquired by the mobile terminal from the mobile terminal;
specifying unit for specifying the second identification information corresponding to the first identification information of the received detection terminal with reference to the database;
generating unit for generating the radio wave intensity information of the mobile terminal by searching the storage means using the specified second identification information as a retrieval key; and
replying unit for transmitting the generated radio wave intensity information to the mobile terminal as a reply.

6. The radio wave condition detection system according to claim 5,
wherein the storage means stores the probe information of the mobile terminal of at least a certain period, and
the generating means generates the radio wave intensity information of the mobile terminal on a basis of the probe information of the mobile terminal of the certain period by searching the storage means.

7. The radio wave condition detection system according to claim 5 or 6,
wherein the second identification information is identification information issued or set by each of the detection terminals upon initial activation.
